# EUROPEAN PATENT APPLICATION

(11) **EP 0 927 920 A1**
(43) Date of publication of application: **07.07.1999**
(21) Application number: 99200002.6
(22) Date of filing: 05.01.1999
(51) Int. Cl.: G05F 3/24, H04Q 7/18

(54) **Voltage sag limiting system and method of operation**

(30) Priority: 05.01.1998 US 70432 P
(71) Applicant: Texas Instruments Incorporated, Dallas, Texas 75251 (US)
(72) Inventor: Pullen, Donald T., Anaheim, CA 92804 (US); Hastings, Roy A., Allen, Texas 75002 (US)
(74) Representative: Holt, Michael

(57) **Abstract**

A system (10) for limiting the current (56) drawn by a load (22) from a power source (18) includes a control circuit (12) and a current limiting circuit (14). Control circuit (12) receives a threshold voltage (21), VTHRESHOLD, and a source voltage (19), VSOURCE, associated with power source (18), and generates a control voltage (24) in response to VSOURCE and VTHRESHOLD. Current limiting circuit (14) limits the current (56) drawn by load (22) from power source (18) in response to control voltage (24) such that VSOURCE does not decrease below VTHRESHOLD.

## Description

### TECHNICAL FIELD OF THE INVENTION

This invention relates in general to power devices, and more particularly to a voltage sag limiting system and method of operation.

### BACKGROUND OF THE INVENTION

The series resistance of a carbon-zinc or alkaline-manganese cell battery increases as the cell voltage decreases over a period of use. As the battery approaches the end of its useful life, the increase in cell resistance and the decrease in cell voltage intensify. This is particularly true for a carbon-zinc battery. Applying a heavy load at this stage of the battery's life may cause the cell voltage to sag sharply below useful levels. In such a case, a circuit which depends on the battery for power may malfunction.

A conventional approach to limit this voltage sag on the battery limits the current drawn by the load to a fixed maximum. However, a fixed current limit cannot adapt to changes in cell resistance or cell voltage. As a result, a fixed current limit cannot adaptively draw an optimal amount of current from the battery without the battery voltage sagging below useful levels. Another approach is to sense that the battery has reached the latter stages of its useful life and discard the battery before it causes a circuit which depends on the battery for power to malfunction. Again, this approach does not optimize the energy available from the battery.

### SUMMARY OF THE INVENTION

In accordance with the present invention, a voltage sag limiting system is provided which substantially eliminates or reduces disadvantages and problems associated with prior voltage sag limiting systems.

In accordance with one embodiment of the present invention, a system for limiting the current drawn by a load from a power source includes a load coupled to a power source. A control circuit coupled to a threshold voltage and a source voltage associated with the power source generates a control voltage in response to the source voltage and the threshold voltage. A current limiting circuit coupled to the control circuit and the load limits the current drawn by the load from the power source in response to the control voltage generated by the control circuit such that the source voltage does not decrease below the threshold voltage.

Another embodiment of the present invention is a method for limiting the current drawn by a load from a power source, wherein the method includes receiving a source voltage associated with the power source and a threshold voltage. The method further includes generating a control voltage in response to the source voltage and the threshold voltage. The method concludes by limiting the current drawn by the load from the power source in response to the control voltage such that the source voltage does not decrease below the threshold voltage.

Technical advantages of the present invention include a voltage sag limiting system that adaptively limits the current drawn by a load so as to prevent the cell voltage from sagging below a specified threshold. The voltage sag limiting system allows the load to draw the maximum possible current from the battery consistent with maintaining the cell voltage above the specified threshold. As the battery approaches the end of its useful life, the voltage sag limiting system progressively reduces the current drawn by the load to compensate for reduced cell voltage and increased cell resistance.

A particular application for this invention includes a pager which draws power from a battery. Near the end of the battery's useful life, activation of the pager's motor, vibrator, or LCD backpanel lamp could cause the cell voltage to sag so low that the pager microprocessor suffers loss of stored information. The voltage sag limiting circuit, by controlling the current drawn upon the battery, ensures the continued proper operation of the microprocessor until the battery reaches the end of its useful life. The present invention allows maximum possible backpanel illumination and motor/vibrator intensity consistent with continued microprocessor operation.

### BRIEF DESCRIPTION OF THE DRAWINGS

For a more complete understanding of the present invention and its advantages, reference is now made to the following description taken in conjunction with the accompanying drawings, in which like reference numbers indicate like features and wherein:
FIGURES 1A and 1B are block diagrams of a voltage sag limiting system in accordance with the teachings of the present invention;
FIGURE 2 illustrates one embodiment of the voltage sag limiting system; and
FIGURE 3 illustrates another embodiment of the voltage sag limiting system.

### DETAILED DESCRIPTION OF THE INVENTION

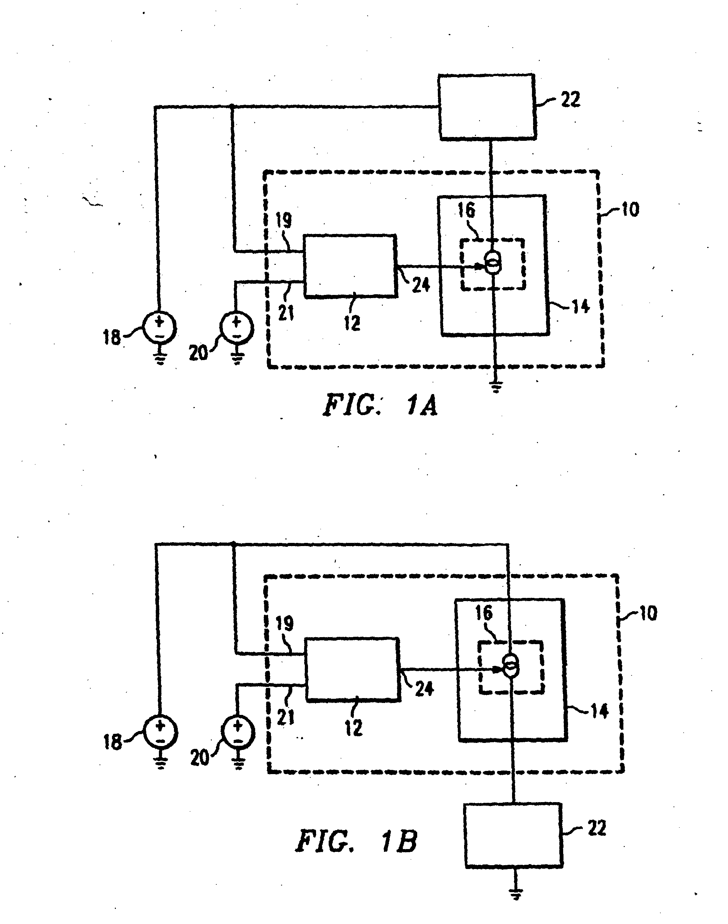

FIGURE 1A illustrates a block diagram of a voltage sag limiting system 10 that includes a control circuit 12 coupled to a current limiting circuit 14. In general, control circuit 12 receives a source voltage 19 (VSOURCE) associated with a power source 18, and a threshold voltage 21 (VTHRESHOLD) applied by a voltage source 20. In response to the voltage difference between VSOURCE and VTHRESHOLD, control circuit 12 generates a control voltage 24. Current limiting circuit 14 limits the current drawn by a load 22 from power source 18 in proportion to control voltage 24 such that VSOURCE does not decrease below VTHRESHOLD.

Although system 10 is illustrated in a low-side drive application in FIGURE 1A, it should be understood that system 10 may also be implemented in a high-side drive application as illustrated in FIGURE 1B. The following description of system 10 applies to both embodiments illustrated in FIGURES 1A and 1B.

System 10 includes control circuit 12 coupled to power source 18, voltage source 20, and load 22. System 10 further includes current limiting circuit 14 coupled to control circuit 12 and load 22. In one embodiment, current limiting circuit 14 includes a series-pass element 16 coupled to load 22. Although element 16 is illustrated as a voltage-controlled current source, it may comprise a power transistor, such as a MOSFET, BJT, or other suitable transistor device. Power source 18 may be any power source having an internal series resistance, including either a primary or a secondary battery. In one embodiment, a voltage reference circuit powered from power source 18 establishes VTHRESHOLD, eliminating the need for multiple power sources.

In operation, control circuit 12 generates a control voltage 24 in response to the difference in voltage between VSOURCE and VTHRESHOLD. Control voltage 24 controls the operation of current limiting circuit 14, including element 16. In general, current limiting circuit 14 limits the current drawn by load 22 from power source 18 in proportion to control voltage 24 such that VSOURCE does not decrease below VTHRESHOLD. For example, if VSOURCE is greater than the applied VTHRESHOLD, control circuit 12 generates a sufficient control voltage 24 to drive current limiting circuit 14 fully on so that it no longer limits the current flowing through load 22. Consequently, load 22 draws current from power source 18, causing VSOURCE to decrease. Control circuit 12 drives current limiting circuit 14 fully on, and this condition persists until load 22 causes VSOURCE to decrease to a voltage approaching VTHRESHOLD. At this point, control circuit 12 begins to adjust control voltage 24 in response to the decrease in VSOURCE. In proportion to control voltage 24, current limiting circuit 14 limits the current drawn by load 22 from power source 18 such that VSOURCE does not decrease below a voltage equal to VTHRESHOLD. In a particular embodiment, applying a VTHRESHOLD greater than VSOURCE causes control circuit 12 to generate control voltage 24 insufficient to drive current limiting circuit 14. As a result, current limiting circuit 14 does not allow any current to flow through load 22.

Previous voltage sag limiting systems which contain a current limiting circuit that supplies a fixed current to the load cannot adapt to variations in cell resistance and cell voltage. Either the load cannot draw an optimal amount of current from the power source, or the current drawn by the load will cause the cell voltage to decrease below useful levels when the battery nears the end of its useful life. In the present invention, control circuit 12 adjusts control voltage 24 in response to variations in the cell voltage, VSOURCE, in relation to an applied threshold voltage, VTHRESHOLD. Furthermore, current limiting circuit 14 adaptively limits the current drawn by load 22 from power source 18 in response to control voltage 24 so that VSOURCE does not decrease below VTHRESHOLD. By monitoring the cell voltage instead of the current drawn from the cell, control circuit 12 adapts to variations in cell resistance over time to extend the operational life of power source 18.

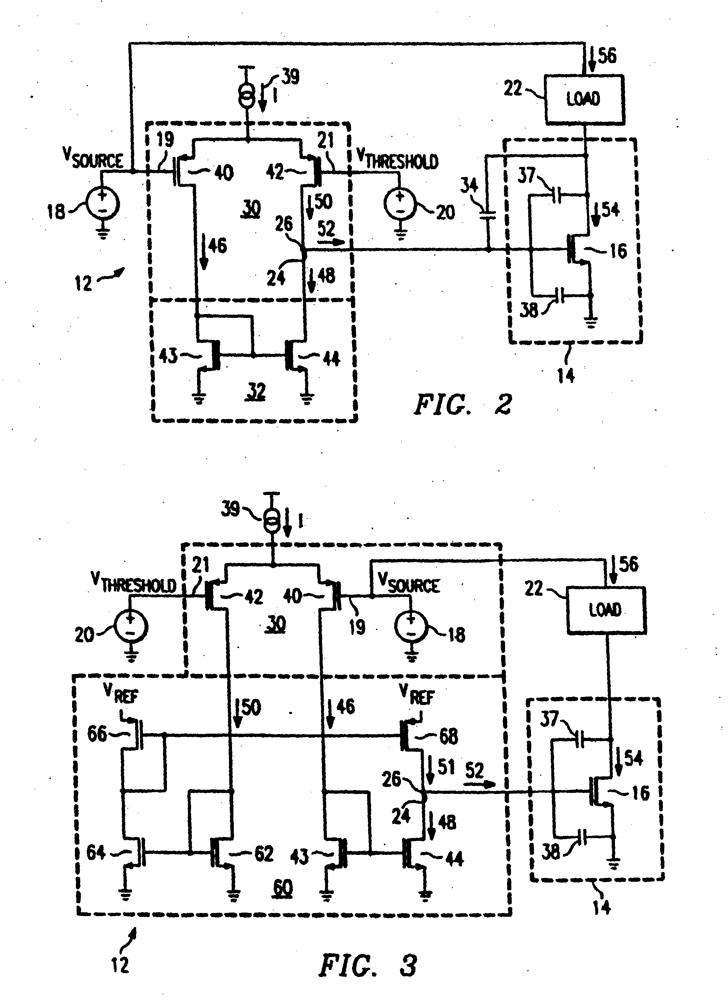

FIGURE 2 illustrates one embodiment of control circuit 12 and current limiting circuit 14 of system 10. Control circuit 12 includes a differential pair circuit 30 coupled to a current mirror circuit 32 and a compensating capacitor 34. Current limiting circuit 14 includes a series-pass element 16, such as a MOSFET, BJT, or other suitable transistor device. In one embodiment, element 16 comprises an n-channel MOSFET, having a drain terminal coupled to load 22 and one terminal of capacitor 34, a source terminal coupled to a reference voltage, and a gate terminal coupled to control voltage 24 at node 26. Node 26 couples differential pair circuit 30, current mirror circuit 32, and the other terminal of capacitor 34. Current limiting circuit 14 may also include an internal gate capacitance associated with element 16 represented by gate-to-drain capacitance 37 and gate-to-source capacitance 38.

In one embodiment, differential pair circuit 30 includes a first input transistor 40, such as a p-channel MOSFET, having a gate terminal coupled to VSOURCE, a source terminal coupled to a current source 39, and a drain terminal coupled to current mirror circuit 32. Differential pair 30 further includes a second input transistor 42, such as a p-channel MOSFET, having a gate terminal coupled to VTHRESHOLD, a source terminal coupled to current source 39, and a drain terminal coupled to current mirror circuit 32 at node 26.

Current mirror circuit 32 includes a first current mirror transistor 43, such as an n-channel MOSFET, having a drain terminal coupled to the drain terminal of transistor 40, a source terminal coupled to a reference voltage, and a gate terminal coupled to the drain terminal of transistor 43. Circuit 32 further includes a second current mirror transistor 44, such as an n-channel MOSFET, having a drain terminal coupled to the drain terminal of transistor 42, a source terminal coupled to a reference voltage, and a gate terminal coupled to the gate terminal of transistor 43.

In operation, control circuit 12 coupled to current limiting circuit 14 and load 22 operates as an amplifier within a negative feedback loop. First input transistor 40 generates a drain current 46 in response to VSOURCE. Current mirror circuit 32 generates a mirror current 48 drawn from node 26 in proportion to drain current 46. In one embodiment, mirror current 48 equals drain current 46. Second input transistor 42 generates a drain current 50 into node 26 in response to VTHRESHOLD. Current source 39 supplies current to transistors 40 and 42.

If VSOURCE is greater than the applied VTHRESHOLD, control circuit 12 generates drain current 50 greater than mirror current 48 producing an excess current 52. In particular, the magnitudes of drain currents 46 and 50 depend upon the magnitudes of the voltage measured from the gate terminal to the source terminal (gate-to-source voltage) of transistors 40 and 42, respectively. If VSOURCE is greater than VTHRESHOLD, then the gate-to-source voltage of transistor 40 is smaller than the gate-to-source voltage of transistor 42. As a result, drain current 46, and consequently, mirror current 48, is smaller than drain current 50. Excess current 52 charges capacitor 34 and gate capacitances 37 and 38 associated with element 16. Together, these charges generate an increasing control voltage 24 at node 26 that drives element 16. In this embodiment, the maximum value of control voltage 24 comprises VTHRESHOLD plus the gate-to-source voltage of transistor 42 minus the drain-to-source voltage of transistor 42. Series-pass element 16 generates a drain current 54 in response to control voltage 24. Consequently, load 22 draws a load current 56 from power source 18 equal to drain current 54, causing VSOURCE to decrease. In one embodiment, system 10 may service a network of loads 22 wherein each load 22 draws a load current 56 from power source 18 in proportion to drain current 54, causing VSOURCE to decrease.

Control voltage 24 increases until either it reaches its maximum limit, as described above, or until load 22 draws sufficient current from power source 18 to cause VSOURCE to decrease to a voltage equal to VTHRESHOLD. When VSOURCE equals VTHRESHOLD, control circuit 12 generates equal currents 48 and 50 so that excess current 52 equals zero and capacitors 34, 37, and 38 maintain control voltage 24 at a stable point of equilibrium. In order to assure stability, capacitors 34, 37 and 38 generate a single dominant pole at node 26. This can be assured by increasing the size of capacitor 34 until the pole it generates at node 26 dominates the system.

Series-pass element 16 limits current 56 drawn by load 22 from power source 18 equal to drain current 54 in response to control voltage 24 applied to the gate terminal of element 16. This adaptive current limit prevents load 22 from drawing additional current from power source 18. As a result, VSOURCE does not decrease below a voltage equal to VTHRESHOLD.

Series-pass element 16 operates, in part, as a current regulating device responsive to control voltage 24, wherein control voltage 24 further depends upon the voltage difference between VSOURCE and VTHRESHOLD. The value of the applied voltage VTHRESHOLD dictates the conduction characteristics of element 16. For example, setting a VTHRESHOLD greater than VSOURCE terminates the flow of current to load 22 from power source 18. Control circuit 12 generates current 48 larger than current 50 in response to a VTHRESHOLD greater than VSOURCE. As a result, control circuit 12 generates control voltage 24 insufficient to drive power element 16 so that element 16 generates no drain current 54 or load current 56. Therefore, it is possible to switch the load off by raising VTHRESHOLD to a higher voltage. Conversely, setting a VTHRESHOLD substantially smaller than VSOURCE provides the ability to disable the voltage sag limiting system. In particular, setting a VTHRESHOLD substantially smaller than VSOURCE may allow load 22 to draw sufficient current from VSOURCE such that VSOURCE decreases below useful levels before reaching VTHRESHOLD.

In one embodiment, the single dominant pole generated by capacitors 34, 37, and 38 prevents instability due to the nonlinear resistance characteristics of load 22, which may be an incandescent light or other nonlinear element. The single dominant pole generated by capacitors 34, 37, and 38 can also override other influences to provide unconditional stability to voltage sag limiting system 10. Furthermore, a network of resistors and capacitors may replace capacitor 34 to tailor the frequency response for varying applications depending upon the characteristics of load 22.

FIGURE 3 illustrates another embodiment of system 10. In contrast to control circuit 12 of FIGURE 2, control circuit 12 of FIGURE 3 provides an alternate current mirror circuit 60. In particular, the drain terminal of a current mirror transistor 62, such as an n-channel MOSFET, couples to the drain terminal of transistor 42 and to the gate terminal of transistor 62. The gate terminal of a current mirror transistor 64, such as an n-channel MOSFET, couples to the gate terminal of transistor 62. The drain terminal of a current mirror transistor 66, such as a p-channel MOSFET, couples to the drain terminal of transistor 64 and to the gate terminal of transistor 66. The gate terminal of a current mirror transistor 68, such as a p-channel MOSFET, couples to the gate terminal of transistor 66. The drain terminal of transistor 43 couples to the drain terminal of transistor 40 and to the gate terminal of transistor 43. The gate terminal of transistor 44 couples to the gate terminal of transistor 43. The drain terminal of transistor 44 couples to the drain terminal of transistor 68 and the gate terminal of element 16 at node 26. The source terminals of transistors 66 and 68 couple to a reference voltage (VREF), while the source terminals of transistors 62, 64, 43, and 44 couple to another reference voltage, such as ground.

Control circuit 12 having current mirror circuit 60 coupled to element 16 and load 22 operates as a transconductance amplifier within a negative feedback loop. First input transistor 40 generates drain current 46 in response to VSOURCE. Current mirror circuit 60 generates mirror current 48 at node 26 in proportion to drain current 46. Second input transistor 42 generates a drain current 50 in response to VTHRESHOLD. Rather than generating current 50 at node 26, as discussed with regard to current mirror circuit 32, current mirror circuit 60 generates a mirror current 51 at node 26 in proportion to current 50. This configuration of current mirror circuit 60 allows control voltage 24 at node 26 to approach VREF, which may be chosen as any suitable voltage independent of VTHRESHOLD. In one embodiment, currents 48 and 51 equal currents 46 and 50, respectively. Current source 39 supplies current to transistors 40 and 42.

If VSOURCE is greater than the applied VTHRESHOLD, control circuit 12 generates current 51 greater than current 48, producing excess current 52. As discussed with regard to FIGURE 2, the magnitudes of drain currents 46 and 50, and consequently, mirror currents 48 and 51, vary in response to the magnitudes of the gate-to-source voltages associated with transistors 40 and 42, respectively. Excess current 52 charges gate-to-drain capacitance 37 and gate-to-source capacitance 38 associated with element 16. In response, these charges generate an increasing control voltage 24 at node 26. In this embodiment of control circuit 12, control voltage 24 drives element 16 and approaches a maximum value of VREF applied to the source terminals of transistors 66 and 68. VREF may exceed the limit on control voltage 24 imposed by control circuit 12 of FIGURE 2 equal to VTHRESHOLD plus the gate-to-source voltage of second input transistor 42 minus the drain-to-source voltage of second input transistor 42. This added margin of voltage for control voltage 24 supplies a larger gate voltage to drive element 16 allowing the use of a smaller physical device. Series-pass element 16 generates drain current 54 in response to control voltage 24 and load 22 draws load current 56 from power source 18 equal to drain current 54, causing VSOURCE to decrease.

Control voltage 24 increases until reaching VREF or until load 22 draws sufficient current to cause VSOURCE to decrease to a voltage equal to VTHRESHOLD. When VSOURCE equals VTHRESHOLD, control circuit 12 generates equal currents 48 and 51 so that excess current 52 equals zero. Due to the configuration of current mirror circuit 60, capacitances 37 and 38 generate a dominant pole sufficient to provide unconditional stability. The frequency of this pole equals the product of the parallel combination of the output resistances of devices 68 and 44 times the effective total capacitance at node 26. The pole frequency can be set arbitrarily low by increasing the output resistance of devices 68 and 44, thereby achieving unconditional stability without the use of large compensation capacitors.

Series-pass element 16 limits current 56 drawn by load 22 from power source 18 equal to drain current 54 in response to control voltage 24 applied to the gate terminal of element 16. This adaptive current limit prevents load 22 from drawing additional current from power source 18 beyond drain current 54. As a result, VSOURCE does not decrease below a voltage equal to VTHRESHOLD.

Although the present invention has been described with several embodiments, a myriad of changes, variations, alterations, transformations, and modifications may be suggested to one skilled in the art, and it is intended that the present invention encompass such changes, variations, alterations, transformations, and modifications as fall within the spirit and scope of the appended claims.

## Claims

1. A system for limiting the current drawn by a load from a power source, comprising:
a power source for coupling to the load;
a control circuit arranged to be coupled to a threshold voltage and a source voltage associated with the power source, the control circuit arranged for generating a control voltage in response to the source voltage and the threshold voltage; and
a current limiting circuit coupled to the control circuit and the load, the current limiting circuit being arranged for limiting the current drawn by the load from the power source in response to the control voltage generated by the control circuit such that the source voltage does not decrease below the threshold voltage.

2. The system of Claim 1, wherein the control circuit comprises:
a first input transistor coupled to the source voltage for generating a first current in response to the source voltage;
a current mirror circuit coupled to the first input transistor for generating a second current proportional to the first current;
a second input transistor coupled to the threshold voltage for generating a third current in response to the threshold voltage; and
a capacitor network coupled to the second input transistor and the current mirror circuit, wherein the capacitor network is arranged for generating the control voltage in response to the second current and the third current.

3. The system of Claim 2, wherein the current mirror circuit comprises:
a first n-channel MOSFET having a gate terminal and a drain terminal, wherein the drain terminal couples to the first input transistor and the gate terminal couples to the drain terminal; and
a second n-channel MOSFET having a gate terminal and a drain terminal, wherein the gate terminal couples to the gate terminal of the first n-channel MOSFET and the drain terminal couples to the capacitor network.

4. The system of Claim 2, wherein the capacitor network comprises a capacitor having two terminals, wherein the first terminal couples to the second input transistor and the current mirror circuit, and the second terminal couples to the load.

5. The system of Claim 2, wherein the capacitor network comprises a capacitance associated with the current limiting circuit.

6. The system of Claim 1, further comprising a current source, and wherein the control circuit further comprises:
a p-channel MOSFET having a gate terminal and a source terminal, wherein the gate terminal couples to the source voltage and the source terminal couples to the current source; and
a p-channel MOSFET having a gate terminal and a source terminal, wherein the gate terminal couples to the threshold voltage and the source terminal couples to the current source.

7. The system of Claim 1, wherein the current limiting circuit comprises a transistor having a first terminal and a second terminal, wherein the second terminal is coupled to the load and the first terminal receives the control voltage generated by the control circuit.

8. The system of Claim 1, wherein the power source comprises a power source having a finite non-zero resistance.

9. The system of Claim 1, wherein the power source comprises a battery.

10. A method for limiting the current drawn by a load from a power source, comprising:
receiving a source voltage associated with the power source;
receiving a threshold voltage;
generating a control voltage in response to the source voltage and the threshold voltage; and
limiting the current drawn by the load from the power source in response to the control voltage such that the source voltage does not decrease below the threshold voltage.

11. The method of Claim 10, wherein the step of generating the control voltage comprises:
generating a first current in response to the source voltage;
generating a second current in response to the threshold voltage; and
generating the control voltage in response to the first current and the second current.

12. The method of Claim 10, wherein the step of limiting the current drawn by the load comprises:
generating an output current in response to the control voltage;
limiting the current drawn by the load from the power source in response to the output current such that the source voltage does not decrease below the threshold voltage.

13. The method of Claim 10, wherein the power source comprises a power source having a finite non-zero resistance.

14. The method of Claim 10, wherein the power source comprises a battery.

15. A system for limiting the current drawn by a load from a power source, comprising:
a source p-channel MOSFET having a gate terminal and a drain terminal, wherein the gate terminal is coupled to a source voltage associated with the power source;
a threshold p-channel MOSFET having a gate terminal and a drain terminal, wherein the gate terminal is coupled to a threshold voltage;
a first n-channel MOSFET having a gate terminal and a drain terminal, wherein the drain terminal is coupled to the drain terminal of the threshold p-channel MOSFET and the gate terminal is coupled to the drain terminal;
a second n-channel MOSFET having a gate terminal and a drain terminal, wherein the gate terminal is coupled to the gate terminal of the first n-channel MOSFET;
a first p-channel MOSFET having a gate terminal and a drain terminal, wherein the gate terminal is coupled to the drain terminal and the drain terminal is coupled to the drain terminal of the second n-channel MOSFET;
a third n-channel MOSFET having a gate terminal and a drain terminal, wherein the drain terminal is coupled to the drain terminal of the source p-channel MOSFET and the gate terminal is coupled to the drain terminal;
a fourth n-channel MOSFET having a gate terminal and a drain terminal, wherein the gate terminal is coupled to the gate terminal of the third n-channel MOSFET;
a second p-channel MOSFET having a gate terminal and a drain terminal, wherein the gate terminal is coupled to the gate terminal of the first p-channel MOSFET and the drain terminal is coupled to the drain terminal of the fourth n-channel MOSFET; and
a power n-channel MOSFET having a gate terminal and a drain terminal, wherein the gate terminal is coupled to the drain terminal of the second p-channel MOSFET and the drain terminal of the fourth n-channel MOSFET, and the drain terminal is coupled to the load.

16. The system of Claim 15, wherein the power n-channel MOSFET further comprises a gate capacitance associated with the gate terminal, wherein the gate capacitance generates a control voltage in response to the source voltage and the threshold voltage.

17. The system of Claim 15, wherein:
the source p-channel MOSFET generates a first current in response to the source voltage;
the third n-channel MOSFET and the fourth n-channel MOSFET generate a second current in response to the first current;
the threshold p-channel MOSFET generates a third current in response to the threshold voltage;
the first n-channel MOSFET, the second n-channel MOSFET, the first p-channel MOSFET, and the second p-channel MOSFET generate a fourth current in response to the third current; and
the power n-channel MOSFET limits the current drawn by the load from the power source in response to the second current and the fourth current.

18. The system of Claim 15, wherein the power source comprises a power source having a finite non-zero resistance.

19. The system of Claim 15, wherein the power source comprises a battery.

20. The system of Claim 15, wherein the load comprises a battery-operated device.
